# EUROPÄISCHE PATENTSCHRIFT

(11) **EP 1 227 204 B1**
(45) Veröffentlichungstag und Bekanntmachung des Hinweises auf die Patenterteilung: **11.03.2009**
(21) Anmeldenummer: 02000377.8
(22) Anmeldetag: 05.01.2002
(51) Int. Cl.: E04H 12/12, E04G 11/28

(54) **Verfahren zur Herstellung eines turmartigen Bauwerks**
Process to manufacture a tower-like building
Procédé de fabrication d'un bâtiment en forme de tour

(30) Priorität: 24.01.2001 AT 1142001
(43) Veröffentlichungstag der Anmeldung: 31.07.2002
(73) Patentinhaber: RUND-STAHL-BAU GESELLSCHAFT M.B.H., A-6971 Fussach (AT)
(72) Erfinder: Mathis, Hugo, Dipl.-Ing., 6900 Bregenz (AT)
(74) Vertreter: Hofmann, Ralf U.

(56) Entgegenhaltungen:
- EP-A- 0 960 986

## Beschreibung

Die Erfindung betrifft ein Verfahren zur Herstellung eines turmartigen Bauwerks, dessen Durchmesser in einem oberen Bereich kleiner ist als in einem unteren Bereich, insbesondere eines kegelstumpfförmigen Bauwerks, wobei das Bauwerk in einer Mehrzahl von Bauetappen errichtet wird, in denen jeweils auf das in den vorhergehenden Bauetappen gebaute Teilbauwerk ein umfangsgeschlossener Bauwerksabschnitt aufgebaut wird.

Ein derartiges Verfahren ist aus dem Dokument EP 0960986 A bekannt.

Es ist bekannt, zur Errichtung eines Bauwerks die Außen- oder Innenschalung vorerst zu errichten und anschließend die Innen- oder Außenschalung schrittweise aufzubauen und entsprechend diesem Aufbau die gebildeten Schalungshohlräume mit Beton zu füllen. Dies im Zusammenhang mit ebenen Wänden, aber auch mit umfangsgeschlossenen oder konisch gestalteten Baukörpern.

Ferner sind im Zusammenhang mit der Errichtung von Rundbauten Kletterschalungen bekannt, bei denen zwei umfangsgeschlossene Schalungsringe an einem Traggerüst aufgehängt werden. Der von den Schalungsringen begrenzte Schalungshohlraum wird mit Beton gefüllt, nach dem Erhärten oder Abbinden des Betons werden die Schalungsringe gelöst und am Traggerüst so weit hochgefahren, daß ihr unterer Teil noch im Bereich der Oberkante des gegossenen Mauerringes liegt. Dann werden die Ringe neuerlich festgespannt und fixiert, Beton wiederum eingefüllt und das erwähnte Wechselspiel wiederholt sich, bis die gewünschte Bauhöhe erreicht ist. Auf diese Weise wird bei solchen zylindrischen Bauten ein Mauerring auf den anderen gesetzt.

Ein weiterer Typ einer Kletterschalung ist beispielsweise in der US-PS 1 478 653 gezeigt und beschrieben. Das Wesen einer solchen

Kletterschalung liegt darin, daß hier das Mauerwerk durchdringende Schalungsanker vorzusehen sind, an und mit welchen die Schalungselemente in ihrer

Gesamtheit verspannt werden, wobei die bei einer Bauetappe jeweils oben einbetonierten Anker in der Folge als Fußanker für die Schalung in der nächsten Bauetappe verwendet werden. In jeder Bauetappe wird dann ein neuer Anker eingebaut, dabei muß vorausgesetzt werden, daß die Schalung über ihre Höhe hinreichend biegesteif ist. Die Schalung wird dann hochgesetzt, wenn der vorausgegangene betonierte Mauerabschnitt abgebunden hat, da er

über die Schalungsanker das gesamte Gewicht der Schalung zu tragen hat. Die Schalung selbst besteht aus den eigentlichen Schalungstafeln und dem die Schalungstafeln versteifenden Gerüst.

Solche Kletterschalungen wurden auch zur Errichtung von Stahlbetontürmen mit einer kegelstumpfförmigen Form verwendet, wie sie bei Windkraftanlagen zum Anbringen von Windrädern eingesetzt werden. Das Problem liegt hierbei im sich von der Basis bis zur Spitze des Turmes
verringernden Durchmesser. Die Kletterschalungen für die Außen- und Innenschalung müssen daher nicht nur kegelmantelförmige Schalhäute aufweisen, sondern ihr Durchmesser muß zur Anpassung an die jeweilige Bauetappe auch veränderbar ausgebildet sein. Dies führt zu einem erheblichen Aufwand, vor allem bei der Ausbildung der Innenschalung. Während auf die umfangsgeschlossene Außenschalung lediglich Zugkräfte wirken, die relativ leicht abgeführt werden können, wirken auf die Innenschalung beim Einfüllen des Betons ganz erhebliche Druckkräfte. Die für die Abführung dieser Druckkräfte bei der Innenschalung üblicherweise vorgesehenen Versteifungsringe können bei ihrer notwendigen Stabilität kaum mit verstellbarem Durchmesser ausgebildet werden. Es wurde daher bereits vorgeschlagen, für jede Bauetappe eigene Versteifungsringe auszubilden und lediglich die Schalungshaut der Innenschalung an einen unterschiedlichen Durchmesser des zu schalenden Betonrings anpaßbar zu gestalten. Dadurch fällt aber ein erheblicher Teil der Einsparung von Materialkosten bei einer Kletterschalung im Vergleich zu einer durchgehenden Schalung weg.

Es ist weiters bereits bekannt, turmartige Bauwerke mit einer kegelstumpfförmigen Form, wie sie als Windtürme bei Windkraftanlagen zum Einsatz kommen, mit Hilfe von vorgefertigten Fertigteilen herzustellen. Die Fertigteile werden dabei entweder an einem von der Baustelle entfernten Ort gefertigt und antransportiert oder in einer Feldfabrik neben dem zu errichtenden Bauwerk vergossen und aushärten gelassen. Das zu einer jeweiligen Bauetappe gehörende Fertigteil wird mit einem Hebezeug auf das in den vorhergehenden Bauetappen gebaute Teilbauwerk aufgesetzt. Die Bauwerksabschnitte werden in vertikaler Richtung mittels durch Kanäle verlaufende Kabel miteinander verspannt. Nachteilig bei der Fertigbauweise ist es, daß unter Umständen sehr große und schwere Teile transportiert werden müssen, wie dies beispielsweise bei den unteren Bauwerksabschnitten eines Windturms der Fall ist. Ein Transport eines solchen Fertigteils von einem entfernten Herstellungsort führt dadurch zu einem erheblichen Transportaufwand mittels eines Spezialtransports. Für das Manipulieren dieser Fertigteile an der Baustelle sind entsprechend tragfähige Hebezeuge erforderlich.

Es wurde daher bereits vorgeschlagen, aufgrund ihrer Größe und Schwere nur erschwert transportierbare und manipulierbare Bauwerksabschnitte geteilt herzustellen. Die Teile können einzeln transportiert bzw. auf das in den vorhergehenden Bauetappen gebaute Teilbauwerk aufgesetzt werden und anschließend miteinander verbunden werden. Nachteilig ist hierbei insbesondere die schlechtere Handhabbarkeit von solchen geteilten Bauwerksabschnitten beim Heben und der Aufwand beim Zusammenbau der Bauwerksabschnitte auf dem Teilbauwerk.

Aufgabe der Erfindung ist es, ein verbessertes Verfahren der eingangs genannten Art bereitzstellen, welches bei einer relativ kurzen Gesamtbauzeit des Bauwerks möglichst kostengünstig und einfach durchführbar ist. Erfindungsgemäß gelingt dies dadurch, daß lediglich in einem Teil der Bauetappen jeweils ein zu erstellender Bauwerksabschnitt auf das in den vorhergehenden Bauetappen gebaute Teilbauwerk mittels Ortbeton aufbetoniert wird, und daß in mehreren nachfolgenden Bauetappen jeweils ein vorbetonierter und als Fertigteil vorgefertigter Bauwerksabschnitt mittels eines Hebezeuges auf das in den vorhergehenden Bauetappen gebaute Teilbauwerk aufgesetzt wird.

Die Grundidee der Erfindung ist es somit, zur Herstellung des Bauwerks sowohl Bauwerksabschnitte mittels Ortbeton aufzubetonieren als auch als Fertigteile vorgefertigte Bauwerksabschnitte einzusetzen. Diejenigen Bauwerksabschnitte, bei deren Vorfertigung als Fertigteile es zu Problemen bei ihrem Transport bzw. ihrer Anhebung kommen würde, werden vorteilhafterweise mittels Ortbeton aufbetoniert. In einer größeren Höhe des Bauwerks, in welcher das Bauwerk einen kleineren Durchmesser als in einem unteren Bereich des Bauwerks aufweist, können in der Folge vorbetonierte Fertigteile eingesetzt werden. Vorteile beider Verfahren werden dadurch kombiniert: Die in großer Höhe durchzuführenden Arbeiten werden durch das Vorbetonieren der Fertigteile am Boden maßgeblich verringert. Transport- bzw. Handlingprobleme von sehr großen und schweren Fertigteilen treten nicht auf. Weiters können bevorzugterweise parallel zur Herstellung von Bauwerksabschnitten mittels Ortbeton Fertigteile vorgefertigt werden, die in einer späteren Bauetappe zum Einsatz kommen. Die Gesamtbauzeit des Bauwerkes kann dadurch verringert werden.

Zur Herstellung der Bauwerksabschnitte mittels Ortbeton können prinzipiell unterschiedliche Schalungstypen verwendet werden, beispielsweise Kletterschalungen. In einem bevorzugten Ausführungsbeispiel der Erfindung wird zur Herstellung der Bauwerksabschnitte aus Ortbeton als Innenschalung eine aus einzelnen Schalungsabschnitten bestehende Innenschalung verwendet. Die Außenkontur des jeweiligen Schalungsabschnittes entspricht dabei der Innenkontur des mit diesem Schalungsabschnitt abzuschalenden Gebäudeabschnittes. Der Schalungsabschnitt weist einen Hauptteil und einen oberen, vom Hauptteil abnehmbaren Teil auf, dessen Außenseite einen Teil der Schalhaut bildet. Die Herstellung eines Bauwerksabschnittes mittels eines solchen Schalungsabschnittes der Innenschalung wird in der Figurenbeschreibung noch genauer erläutert.

Weitere Vorteile und Einzelheiten der Erfindung werden im folgenden anhand der beiliegenden Zeichnung erläutert. In dieser zeigen:
- Fig. 1: eine schematische Ansicht eines Windturms mit einem kegelstumpfförmigen Stahlbetonturm;
- die Fig.: 2 bis 5 schematische Schnitte durch den teilweise fertiggestellten Turm in seinem jeweils obersten Bereich;
- Fig. 6: eine dreidimensionale Teildarstellung eines Schalungsabschnitts der Innenschalung;
- Fig. 7: einen Teilquerschnitt des in der Betonwand befestigten U-Profils mit dem daran befestigten nächst höheren Schalungsabschnitt;
- Fig. 8: eine schematische Seitenansicht eines Ankers;

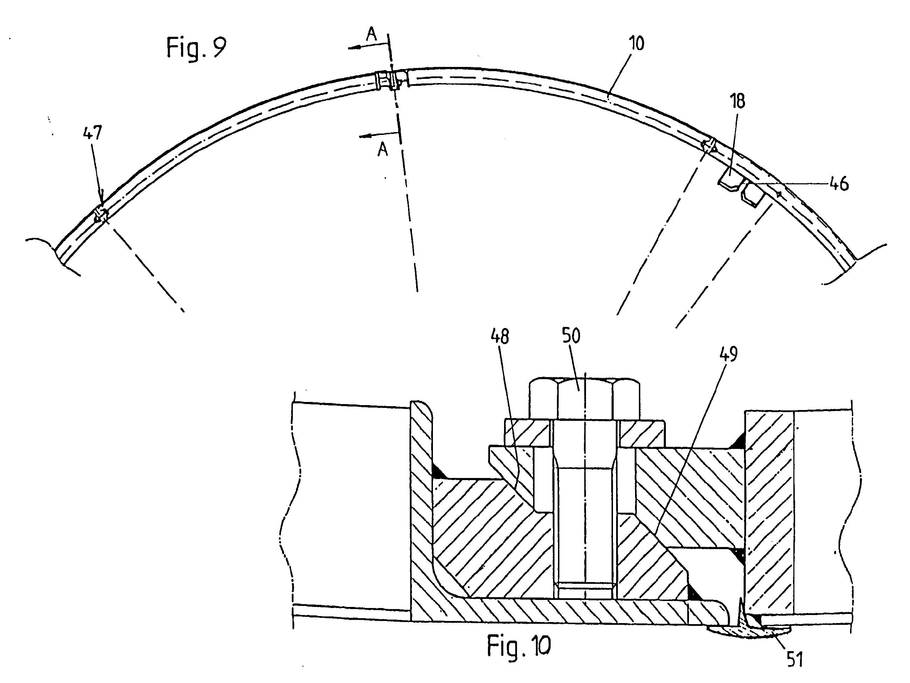

- Fig. 9: eine Draufsicht auf ein etwas modifiziertes Ausführungsbeispiel auf den oberen Teil eines Schalungsabschnitts;
- Fig. 10: einen Querschnitt durch ein Ausbaukeilelement entsprechend der Linie A-A von Fig. 9 und
- Fig. 11: einen schematischen Schnitt durch den unteren Teil einer auf eine Bodenplatte aufgesetzten Innenschalung.

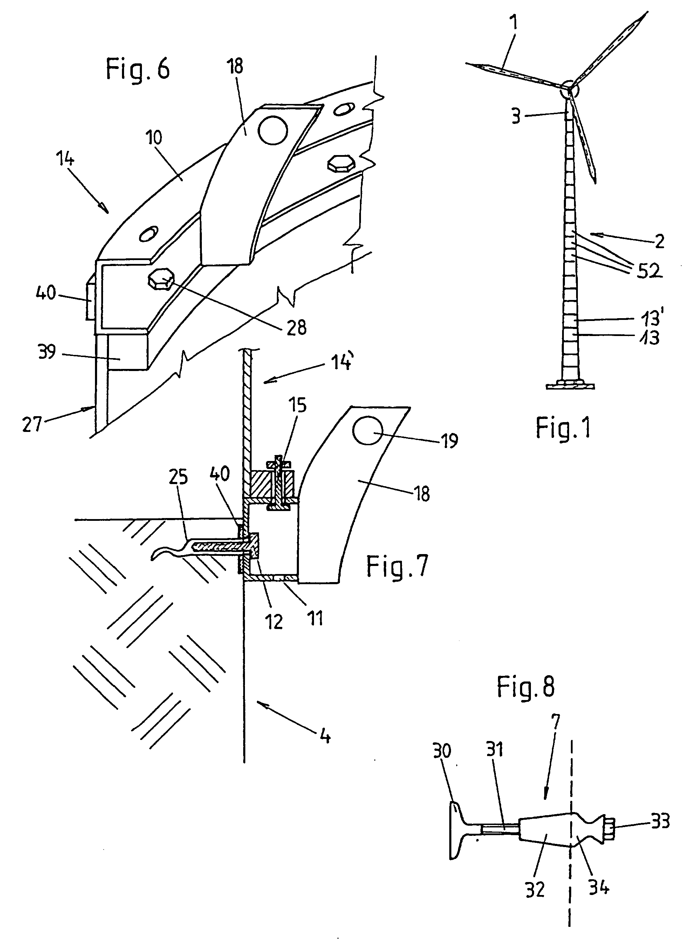

Der in Fig. 1 schematisch dargestellte Windturm weist ein Windrad 1 auf, das auf einem kegelstumpfförmigen bzw. konischem Bauwerk 2 aus Stahlbeton in Form eines Stahlbetonturms gelagert ist. Dazu ist auf der Spitze des Stahlbetonturms eine Kappe 3 aus Stahlblech angebracht, welche das Windrad 1 trägt. Das Bauwerk 2 kann beispielsweise eine Höhe von 88 m aufweisen. An seiner Basis beträgt der Durchmesser 5,8 m und an seiner Spitze 1,8 m. Das Bauwerk 2 wird in einzelnen Bauetappen errichtet, in denen jeweils ein Bauwerksabschnitt auf das in den vorhergehenden Bauetappen gebaute Teilbauwerk aufgebaut wird. In Fig. 1 sind die einzelnen Bauwerksabschnitte, die jeweils eine Höhe von 4,4 m aufweisen durch die waagrechten Linien angedeutet. Bei Windkraftanlagen kommen üblicherweise eine Mehrzahl von solchen Windtürmen zum Einsatz, bei denen jeweils ein Windrad an einem Stahlbetonturm angebracht ist. Beispielsweise können 20 nebeneinander angeordnete Windtürme vorgesehen sein.

Die einzelnen Bauwerksabschnittte sind zur Erzielung einer ausreichenden Stabilität in Vertikalrichtung in bekannter Weise über durch Kanäle verlaufende Kabel vorgespannt. Diese bekannten Einrichtungen zur Vorspannung der Bauwerksabschnitte sind nicht Gegenstand dieser Anmeldung.

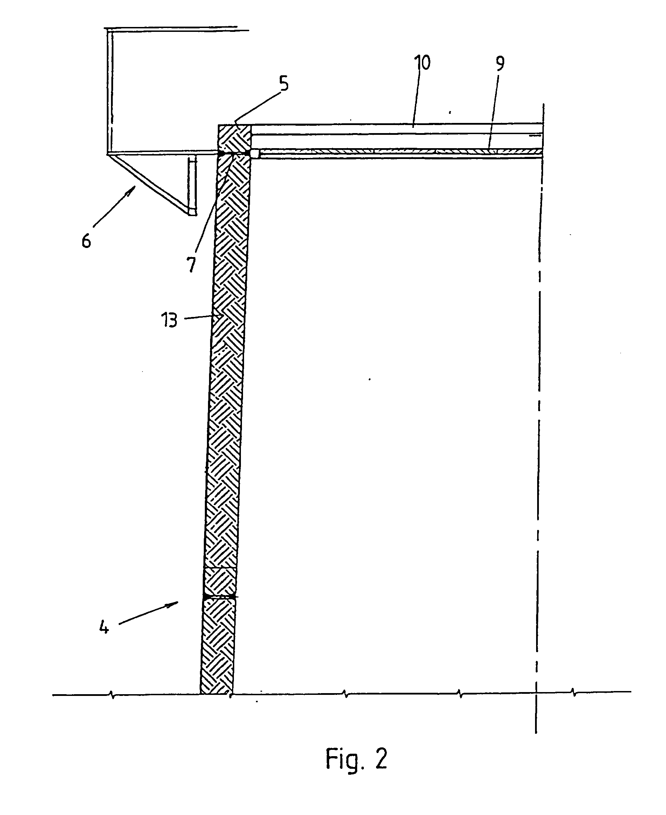

In einem ersten Teil der Bauetappen werden die Bauwerksabschnitte mittels Ortbeton aufbetoniert. Eine bevorzugte Ausführungsform der Herstellung dieser Bauwerksabschnitte wird im folgenden anhand der Fig. 2 bis 5 erläutert, die schematische Querschnitte durch den jeweils obersten Abschnitt eines teilweise fertiggestellten Bauwerks 2 zeigen:

In Fig. 2 ist der Zustand dargestellt, wie er nach Fertigstellung einer Bauetappe vorliegt. An der Außenseite der Betonwand 4 ist im Bereich ihrer Krone 5 ein um die Betonwand 4 umlaufendes Gerüst 6 angebracht, welches eine äußere Arbeitsplattform bildet. Dazu sind in der Betonwand 4 entlang ihres Umfanges an mehreren Stellen in bekannter Weise Anker 7 einbetoniert. Diese Anker können in herkömmlicher Weise aufgebaut sein, vgl. Fig. 8. In eine einbetonierte Gewindeplatte 30 ist eine Gewindestange 31 eingeschraubt, auf deren anderes Ende ein Kletterkonus 32 aufgeschraubt ist. An diesem wird über eine Schraube 33 ein Einhängring 34 befestigt, der über die Betonwand 4 vorsteht. An diesen Einhängring 34 der Anker 7 ist das Gerüst 6 in herkömmlicher Weise über hier nicht näher dargestellte Schuhe aufgehängt. Zur Anpassung an die bei den einzelnen Bauetappen unterschiedlichen Durchmesser der Betonwand 4, die von unten nach oben immer kleiner werden, kann das Gerüst einen nach innen ausziehbaren Teil aufweisen, über den es mittels eines Schuhs am Anker 7 aufgehängt ist.

An der Innenseite der Betonwand sind ebenfalls Anker 7 vorgesehen, an denen mittels wiederum nicht dargestellter Schuhe in bekannter Weise eine innere Arbeitsplattform 9 aufgehängt ist. Dazu kann die Arbeitsplattform 9 sternförmige, zu den einzelnen Kletterkonen verlaufende Arme aufweisen, die im Bereich des Zentrums des Bauwerks miteinander verbunden sind und auf denen Bühnenbretter angeordnet sind. Wenn diese Arme der Arbeitsplattform 9 aus Holz bestehen, können sie im Verlauf der Errichtung des Bauwerks bei jeder Bauetappe auf die erforderliche kürzere Länge abgelängt werden.

Von dem bei dieser beendeten Bauetappe verwendeten Schalungsabschnitt der Innenschalung ist ein oberer Teil 10 an der Innenseite des zuletzt fertiggestellten Bauwerksabschnittes 13 befestigt. Wie in den Fig. 6 und 7 dargestellt, wird dieser obere Teil 10 von einem ringförmigen U-Profil gebildet. Durch Schraubenlöcher 11 ist er mit dem restlichen Teil des Schalungsabschnitts, der den Hauptteil 27 z.B. des Schalungsabschnitts bildet, mittels Schrauben 28 verschraubbar. Anstelle von Schrauben 28 könnten zur Befestigung des oberen Teils 10 am Hauptteil 27 auch U-förmige Klemmteile bzw. Klemmbriden vorgesehen sein, welche den unteren Steg des U-Profils und den oberen Flansch 39 des Hauptteils 27 übergreifen und gegeneinander verspannen. Über Schrauben 12 und Dübel 25, die beim Betonieren dieses Bauwerksabschnitts 13 mit einbetoniert wurden, ist der obere Teil 10 an der Betonwand 4 befestigt. An der einen Teil der Schalhaut bildenden Vorderseite des oberen Teils 10 ist bevorzugterweise ein Vorsprung 40 vorgesehen (beispielsweise in Form eines aufgeschweißten Stahlstreifens). Dieser Vorsprung 40 dient zur Abstützung in der Betonwand 4.

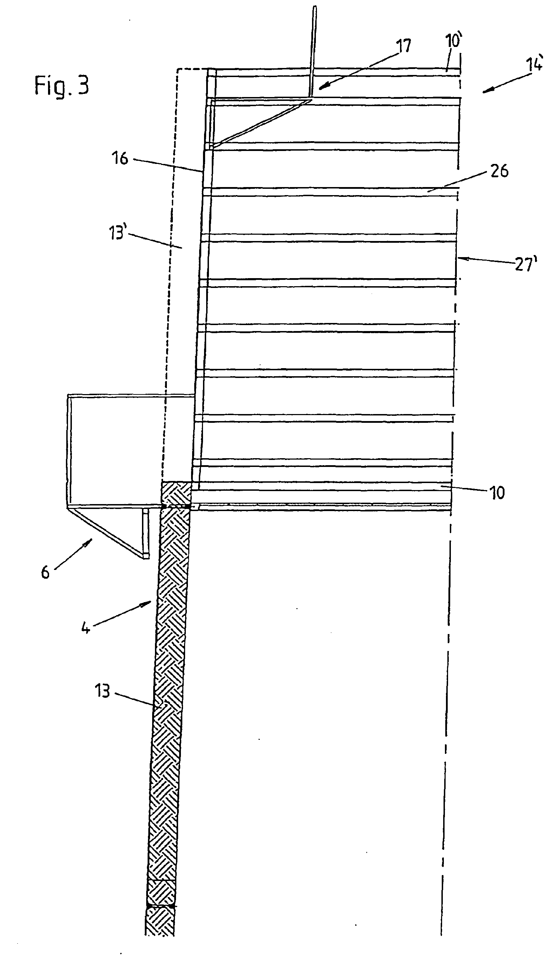

Zur Durchführung der nächsten Bauetappe wird zunächst, wie in Fig. 3 dargestellt, der zu dieser nächsten Bauetappe 13' der Betonwand gehörende Schalungsabschnitt 14' der Innenschalung auf den oberen Teil 10 der zur vorherigen Bauetappe 13 gehörenden Innenschalung aufgesetzt und an diesem mittels Schrauben 15 (vgl. Fig. 7) befestigt. Auch hier könnten zur Befestigung des Schalungsabschnitts 14' am oberen Teil 10 U-förmige Klemmteile anstelle von Schrauben verwendet werden. Für jede dieser Bauetappen 13, 13' des Bauwerks 2 ist ein eigener an den jeweiligen Durchmesser des Bauwerksabschnitts angepaßter Schalungsabschnitt 14, 14' der Innenschalung vorgesehen. Ein solcher Schalungsabschnitt besteht jeweils aus einem Hauptteil 27, 27', der im wesentlichen von der Schalungshaut 16 und Aussteifungsringen 26 gebildet wird und aus einem oberen Teil 10, 10', der am Hauptteil 27, 27' des Schalungsabschnitts 14, 14' über Verschraubungen (oder Klemmteile) befestigt ist. Im oberen Bereich des Hauptteils 27, 27' des Schalungsabschnitts 14, 14' kann weiters eine an der Innenseite des Schalungsabschnitts umlaufende Arbeitsplattform 17 angebracht sein.

Da der Schalungsabschnitt 14' auf den am Bauwerksabschnitt 13 der Betonwand 4 befestigten oberen Teil 10 des vorherigen Schalungsabschnitts aufgesetzt wird und dieser obere Teil bereits die korrekte Ausrichtung des Schalungsabschnitts 14' vorgibt, ist eine weitere Ausrichtung des Schalungsabschnitts 14' im allgemeinen nicht erforderlich. Eine gegebenenfalls erforderliche Korrektur der Ausrichtung des Schalungsabschnitts 14' ist auf einfache Weise durch Zwischenschaltung von entsprechenden scheibenförmigen Ausgleichselementen zwischen dem oberen Teil 10 und dem Schalungsabschnitt 14' möglich.

Der Schalungsabschnitt 14' wird über einen entsprechenden Kran von oben auf den oberen Teil 10 abgelassen. Zur Erleichterung der Positionierung sind am oberen Teil 10 innen nach oben abstehende und nach innen ausgerichtete Führungslaschen 18 angeordnet. Um den Umfang des den oberen Teil 10 bildenden U-Profils sind mehrere derartige Führungslaschen 18 vorgesehen. In den Führungslaschen 18 sind Durchtrittsöffnungen 19 angeordnet, mittels derer der obere Teil 10' des Schalungsabschnitts 14' an Kranhaken aufhängbar ist.

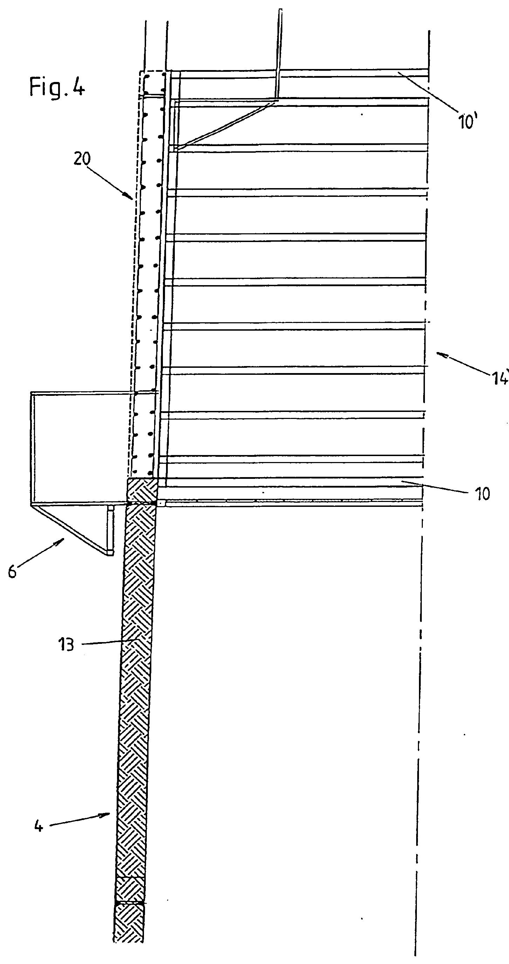

Nach der Anbringung des Schalungsabschnitts 14' wird die Armierung 20 auf die Krone 5 aufgesetzt (Fig. 4). An dieser Krone 5 stehen nicht dargestellte Armierungsstäbe aus der Betonwand 4 ein Stück weit hervor, welche mit der Armierung 20 überlappen. Die ringförmige Armierung 20 wird zunächst am Boden zusammengebaut und anschließend mittels eines Kranes von oben her zugeführt. An der Außenseite des Schalungsabschnitts 14' können (in den Figuren nicht dargestellte) Halteteile für die Armierung 20 angebracht sein. Im oberen Bereich der Armierung sind weiters am Schalungsabschnitt 14' die einzubetonierenden Anker 7 angebracht.

Anstelle der beschriebenen Aufbringung des Schalungsabschnitts 14' und der Armierung 20 in getrennten, aufeinanderfolgenden Arbeitsschritten ist in einer bevorzugten Ausführungsform der Erfindung folgende Vorgangsweise vorgesehen: Die Armierung 20 wird um die Außenseite des fertig montierten Schalungsabschnitts 14' montiert und an dieser befestigt, solange sich der Schalungsabschnitt 14' noch am Boden befindet. Anschließend wird der Schalungsabschnitt 14' mit der daran befestigten Armierung 20 von einem Kran angehoben und von oben auf den oberen Teil 10 abgelassen.

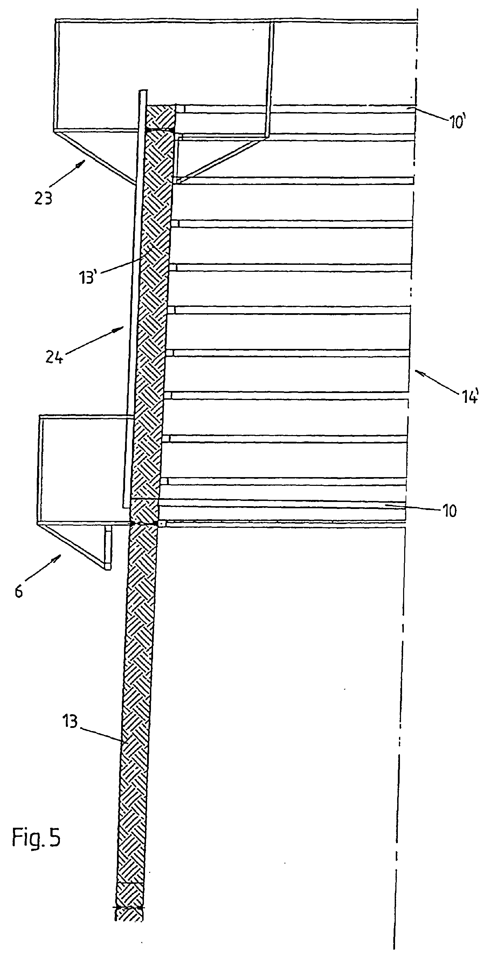

Die als nächstens entsprechend Fig. 5 anzubringende Außenschalung 24 kann in einer bekannten Weise als Kletterschalung mit einem veränderbaren Durchmesser ausgebildet sein. Die genauere Ausbildung der Außenschalung ist nicht Gegenstand dieser Erfindung. Die Höhe der Außenschalung 24 entspricht der Höhe der Schalungsabschnitte 14, 14' der Innenschalung.
Die Außenschalung wird in bekannter Weise mit den Ankern 7, die auf der Außenseite des unteren Bauwerksabschnitts 13 angeordnet sind, verspannt. Im oberen Bereich wird die Außenschalung zusätzlich oberhalb der Armierung 20 mit dem Schalungsabschnitt 14' der Innenschalung verspannt. Weiters können ein oder mehrere außen um die Außenschalung umlaufende Formgebungsringe vorgesehen sein, die in den Figuren nicht dargestellt sind. Im oberen Bereich der Außenschalung ist weiters eine an der Außenseite der Außenschalung umlaufende Arbeitsplattform 23 angebracht. In der Folge wird der Beton eingefüllt und aushärten gelassen. Nach der Aushärtung des Betons wird die Außenschalung 24 abgenommen, in jeden Anker 7 im oberen Bereich der Außenseite des fertiggestellten Bauwerksabschnitts 13' ein Einhängring 34 (vgl. Fig. 8) eingeschraubt und das Gerüst 6 mittels eines Krans angehoben und mit Schuhen in diesen Ankern eingehängt. Der ringförmige obere Teil 10 des vorhergehenden Schalungsabschnitts 14 wird von der Betonwand 4 abgeschraubt und kann nach Öffnung eines Ausbaukeilelementes in mehrere Ringsegmente zerlegt werden.

Ein solches Ausbaukeilelement 8 ist in den Figuren 12 und 13 dargestellt, die sich auf ein etwas modifiziertes Ausführungsbeispiel eines oberen Teils 10 eines Schalungsabschnitts 14 beziehen. Bei diesem modifizierten Ausführungsbeispiel sind die Führungslaschen 18 in Form von schräg nach oben abstehenden Blechen ausgebildet, die in der Mitte einen trichterförmigen Schlitz aufweisen. Dieser Schlitz wirkt mit an der Innenseite im untersten Bereich des Hauptteils 27' angebrachten Führungsblechen zusammen, welche beim Aufsetzen des nächsthöheren Schalungsabschnitts 14' in den Schlitz 46 eingefädelt werden. Dadurch wird die Justierung des nächsten Schalungsabschnitts 14' in dessen Umfangsrichtung relativ zum oberen Teil 10 erreicht. Weiters sind in Fig. 12 die Verschraubungen 47 dargestellt, über die die einzelnen Segmente des oberen Teils 10 aneinander befestigt werden (diese befinden sich an der Unterseite des oberen Steges des U-Profils des oberen Teils 10). Das Ausbaukeilelement 8 weist Keilflächen 48, 49 auf, an denen die beiden über eine Schraube 50 miteinander verschraubten Teile des Ausbaukeilelements aneinander angrenzen. Nach Öffnen der Schraube 50 kann das Ausbaukeilelement geöffnet werden, wobei die Keilflächen 48, 49 zur Verhinderung einer Verklemmung der beiden Teile des Ausbaukeilelementes dienen, wenn eine Druckkraft (aufgrund des eingebrachten Betons) auf die beiden Teile des Ausbaukeilelements wirkt. Der Spalt in der Schalhaut wird von einem PVC-Streifen 51 überdeckt.

Auch der Hauptteil 27' des Schalungsabschnitts 14' wird entlang seines Umfangs in mehrere Teile zerlegt, die Umfangsteile des oberen Teils 10 und des Hauptteils 27' des Schalungsabschnitts 14' entsprechen einander dabei. Die Schrauben 28 zwischen dem oberen Teil 10' und dem Hauptteil 27' (bzw. die diese Teile verbindenden Klemmteile) des Schalungsabschnitts 14' werden gelöst und die Teile 27', 10 werden mittels eines Krans aus dem Bauwerk herausgehoben. An den Innenseiten der Anker 7 im oberen Bereich des Bauwerksabschnitts 13' werden Einhängringe 34 eingeschraubt. Die sternförmigen Arme der Arbeitsplattform 9 werden entsprechend gekürzt bzw. eingeschoben, und die Arbeitsplattform 9 wird mittels eines Krans angehoben und in den Ankern 7 am oberen Ende des Bauwerksabschnitts 13' mittels entsprechender Schuhe eingehängt. Somit ist ein weiterer Bauwerksabschnitt abgeschlossen und der in Fig. 2 dargestellte Zustand wiederum erreicht. Der Schalungsabschnitt 14 der Innenschalung steht nunmehr für die entsprechende Bauetappe eines mit gleichzeitiger Bautätigkeit zu errichtenden gleichförmigen Bauwerks zur Verfügung. Der obere Teil 10' des Schalungsabschnitts 14' ist an der Innenseite der Betonwand 4 befestigt und dient als Auflager für den Schalungsabschnitt der nächstfolgenden Bauetappe.

In der ersten Bauetappe des Bauwerkes wird der unterste Schalungsabschnitt des Bauwerks auf die Bodenplatte bzw. das Fundament des Bauwerks aufgesetzt und entsprechend ausgerichtet. Dazu können beispielsweise an der Unterkante des Schalungsabschnitts entlang von dessen Umfang mehrere Stellschrauben vorgesehen sein, über die der Schalungsabschnitt auf der Bodenplatte aufliegt. Nach deren Einstellung unter exakter Ausrichtung des Schalungsabschnitts wird ein die Schalhaut nach unten bis zur Bodenplatte verlängerndes, flächiges Element am Schalungsabschnitt angebracht.

Die folgenden Bauwerksabschnitte werden in der beschriebenen Weise hergestellt. Nach einer vorgegebenen Anzahl von auf diese Weise durchzuführenden Bauetappen, bei denen jeweils ein zu erstellender Bauwerksabschnitt auf das in der vorhergehenden Bauetappe gebaute Teilbauwerk mittels Ortbeton aufbetoniert wird, folgt ein zweiter Teil von Bauetappen. Bei diesen wird jeweils ein vorbetonierter und als Fertigteil vorgefertigter Bauabschnitt mittels eines Hebezeuges auf das in den vorhergehenden Bauetappen gebaute Teilbauwerk aufgesetzt. Aufgrund des kleineren Durchmessers dieser Bauwerksabschnitte, können diese Fertigteile ohne größere Probleme von einem Herstellungsort zur Baustelle angeliefert werden und mittels eines Hebezeuges aufgehoben werden. Auch die Herstellung in einer Feldfabrik neben der Baustelle ist möglich. Bevorzugterweise werden die Fertigteile parallel zur Herstellung der unteren Bauwerksabschnitte mittels Ortbeton gefertigt, wodurch sich eine besonders kurze insgesamte Bauzeit des Bauwerks bzw. der mehreren herzustellenden Bauwerke ergibt.

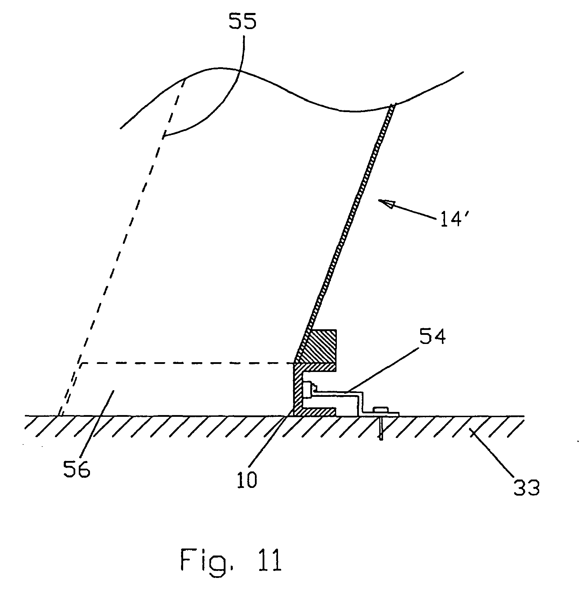

Zur Herstellung der Fertigteile in einer Feldfabrik können bevorzugterweise Schalungsabschnitte eingesetzt werden, die im wesentlichen gleich aufgebaut sind wie die zur Herstellung der Bauwerksabschnitte mittels Ortbeton verwendeten. An der Unterseite eines Schalungsabschnitts 14' der Innenschalung wird der obere Teil 10 des vorhergehenden Schalungsabschnitts befestigt. Die Schalung wird auf eine ebene Bodenplatte 53 aufgesetzt. Der Teil 10 wird an der Bodenplatte mit einem geeigneten Befestigungsteil 54 befestigt, vorzugsweise festgeschraubt. Eine Außenschalung 55, die in Fig. 11 lediglich durch eine strichlierte Linie dargestellt ist, wird ebenfalls an der Bodenplatte befestigt. Zwischen der Außenschalung und der Innenschalung wird auf der Bodenplatte weiters ein Podest 56 angeordnet, so daß die Höhe des Fertigteils derjenigen der mittels Ortbeton hergestellten Bauwerksabschnitte entspricht. Beton wird eingefüllt und aushärten gelassen.

Beispielsweise werden bei einem aus zwanzig Bauwerksabschnitten bestehenden Stahlbetonturm, wie er in Fig. 1 dargestellt ist, die ersten acht Bauwerksabschnitte 13, 13' mittels Ortbeton hergestellt. Die anschließenden Bauwerksabschnitte 52 (vgl. Fig. 1) werden mittels Fertigteilen hergestellt.

Zur Zentrierung eines Fertigteils auf der Mauerkrone des in den vorhergehenden Bauetappen gebauten Teilbauwerks kann das Fertigteil an seiner Unterseite federartige Vorsprünge aufweisen, die in Umfangsnuten entlang der Mauerkrone ragen. Nach dem Aufbringen Fertigteile bzw. einer vorgegebenen Anzahl von Fertigteilen werden diese mittels durch Kanäle durchgezogene Kabel miteinander bzw. mit den mit Ortbeton hergestellten Bauwerksabschnitten verspannt. Solche Verspannungen sind sowohl von der Fertigteilbauweise als auch von der Herstellung von turmartigen Windkrafttürmen mittels Ortbeton bekannt und müssen daher an dieser Stelle nicht im einzelnen beschrieben werden. Beispielsweise werden die unteren acht Bauwerksabschnitte mit dem Fundament verspannt (die Kabel treten im achten Bauwerksabschnitt an der Innenwandung heraus und sind gegenüber dieser festgelegt) und die Bauwerksabschnitte 8 bis 20 (welcher der oberste Bauwerksabschnitt ist) werden miteinander verspannt.

Während der Herstellung der Bauwerksabschnitte aus den vorgefertigten Fertigteilen (vor deren Verspannung) können diese mittels einer von der Fertigteilbauweise her ebenfalls bereits bekannten Sturmsicherung gesichert sein.

Unterschiedliche Modifikationen des beschriebenen Ausführungsbeispiels der Erfindung sind denkbar und möglich. Obwohl die Ausbildung der Außenschalung als Kletterschalung einfach und vorteilhaft ist, wäre eine Ausbildung der Außenschalung auf eine andere Art und Weise möglich. Beispielsweise könnte eine Außenschalung vorgesehen sein, die in analoger Weise zur Innenschalung ausgebildet ist. Eine solche Außenschalung würde somit eine Mehrzahl von miteinander verbindbaren Schalungsabschnitten aufweisen, die in ihrem Durchmesser an den jeweiligen Bauwerksabschnitt angepaßt sind und insgesamt der Form der äußeren Oberfläche der kegelstumpfförmigen Betonwand entsprechen. Ein solcher Schalungsabschnitt einer Außenwandung könnte ebenfalls einen abnehmbaren oberen Teil aufweisen, der an der Betonwand befestigt wird und als Auflager für den zur nächsten Bauetappe gehörenden Schalungsabschnitt dient. Auch könnte jeweils der gesamte Schalungsabschnitt der Außenschalung mit der Betonwand verbunden werden und als Auflager für den der nächsten Bauetappe zugeordneten Schalungsabschnitt dienen und erst nach Fertigstellung dieser nächsten Bauetappe abgenommen werden.

Auch die Innenschalung für die mittels Ortbeton herzustellenden Bauwerksabschnitte könnte in einer anderen Weise als beschrieben ausgebildet sein, beispielsweise in der Art einer herkömmlichen Kletterschalung mit veränderbarem Radius.

Der Teil, der mittels Ortbeton hergestellten Bauwerksabschnitte kann unterschiedlich sein, abgesehen vom Fundament ist mindestens ein solcher Bauwerksabschnitt vorhanden, wobei vorzugsweise zwei oder mehrere solcher Bauwerksabschnitte mittels Ortbeton hergestellt werden.

Das erfindungsgemäße Verfahren eignet sich nicht nur zur Herstellung von kegelstumpfförmigen Bauwerken, sondern auch für andere turmartige Bauwerke, deren Durchmesser in einem oberen Bereich kleiner ist als in einem unteren Bereich. Jedenfalls folgen der Herstellung von ein oder mehreren Bauwerksabschnitten mittels Ortbeton mehrere aus Fertigteilen bestehende Bauwerksabschnitte. Es wäre denkbar und möglich, daß in der weiteren Folge wiederum ein oder mehrere Bauwerksabschnitte mittels Ortbeton aufbetoniert werden.

### Legende zu den Hinweisziffern:

- 1: Windrad
- 2: Bauwerk
- 3: Stahlkappe
- 4: Betonwand
- 5: Krone
- 6: Gerüst
- 7: Anker
- 8: Ausbaukeilelement
- 9: Arbeitsplattform
- 10, 10': oberer Teil
- 11: Schraubenloch
- 12: Schraube
- 13, 13': Bauwerksabschnitt
- 14, 14': Schalungsabschnitt
- 15: Schraube
- 16: Schalungshaut
- 17: Arbeitsplattform
- 18: Führungslasche
- 19: Durchtrittsöffnung
- 20: Armierung
- 23: Arbeitsplattform
- 24: Außenschalung
- 25: Dübel
- 26: Aussteifungsring
- 27, 27': Hauptteil
- 28: Schraube
- 29: Befestigungswinkel
- 30: Gewindeplatte
- 31: Gewindestange
- 32: Kletterkonus
- 33: Schraube
- 34: Einhängring
- 39: Flansch
- 40: Vorsprung
- 46: Schlitz
- 47: Verschraubung
- 48: Keilfläche
- 49: Keilfläche
- 50: Schraube
- 51: PVC-Streifen
- 52: Bauwerksabschnitt
- 53: Bodenplatte
- 54: Befestigungsteil
- 55: Außenschalung
- 56: Podest

## Patentansprüche

1. Verfahren zur Herstellung eines turmartigen Bauwerks, dessen Durchmesser in einem oberen Bereich kleiner ist als in einem unteren Bereich, insbesondere eines kegelstumpfförmigen Bauwerks, wobei das Bauwerk in einer Mehrzahl von Bauetappen errichtet wird, in denen jeweils auf das in den vorhergehenden Bauetappen gebaute Teilbauwerk ein umfangsgeschlossener Bauwerksabschnitt aufgebaut wird, **dadurch gekennzeichnet, daß** lediglich in einem Teil der Bauetappen jeweils ein zu erstellender Bauwerksabschnitt (13, 13') auf das in den vorhergehenden Bauetappen gebaute Teilbauwerk mittels Ortbeton aufbetoniert wird, und daß in mehreren nachfolgenden Bauetappen jeweils ein vorbetonierter und als Fertigteil vorgefertigter Bauwerksabschnitt (52) mittels eines Hebezeuges auf das in den vorhergehenden Bauetappen gebaute Teilbauwerk aufgesetzt wird.

2. Verfahren nach Anspruch 1, **dadurch gekennzeichnet, daß** für die aus Ortbeton herzustellenden Bauwerksabschnitte (13, 13') eine aus mehreren Schalungsabschnitten (14, 14') bestehende Innenschalung vorgesehen ist, wobei ein Schalungsabschnitt jeweils einen umfangsgeschlossenen Hauptteil (27, 27') und einen umfangsgeschlossenen oberen, vom Hauptteil abnehmbaren Teil (10, 10') aufweist, dessen Außenseite einen Teil der Schalhaut bildet.

3. Verfahren nach Anspruch 1 oder Anspruch 2, **dadurch gekennzeichnet, daß** der obere Teil (10) am unteren Ende des Hauptteils (27') des zur nächsten Bauetappe gehörenden Schalungsabschnitts (14') befestigbar ist.

4. Verfahren nach einem der Ansprüche 1 bis 3, **dadurch gekennzeichnet, daß** mehrere im wesentlichen gleichartige Bauwerke, insbesondere Stahlbetontürme einer Windkraftanlage, in gleichzeitiger Bautätigkeit errichtet werden.

5. Verfahren nach einem der Ansprüche 1 bis 4, **dadurch gekennzeichnet, daß** parallel zur Herstellung der Bauwerksabschnitte (13, 13') aus Ortbeton zumindest ein Teil der vorbetonierten und als Fertigteile ausgebildeten Bauwerksabschnitte (52) hergestellt wird.

6. Verfahren nach einem der Ansprüche 1 bis 5, **dadurch gekennzeichnet, daß** abgesehen vom Fundament mindestens zwei, vorzugsweise mehr als zwei Bauwerksabschnitte (13, 13') mittels Ortbeton hergestellt werden.

7. Verfahren nach einem der Ansprüche 1 bis 6, **dadurch gekennzeichnet, daß** zur Herstellung von als Fertigteil vorgefertigten Bauwerksabschnitten als Innenschalung jeweils ein Schalungsabschnitt (14') verwendet wird, der den für die Herstellung von Bauwerksabschnitten aus Ortbeton verwendeten Schalungsabschnitten im wesentlichen entspricht, wobei der Schalungsabschnitt einen Hauptteil und einen vom Hauptteil abnehmbaren oberen Teil umfaßt und wobei an der Unterseite des Hauptteils der obere Teil (10) des zum vorherigen Bauwerksabschnitt gehörenden Schalungsabschnittes befestigt ist und die Innenschalung auf einer Bodenplatte aufgesetzt ist und an dieser befestigt ist.

8. Verfahren nach Anspruch 7, **dadurch gekennzeichnet, daß** zwischen der Innenschalung und der Außenschalung ein Podest in Höhe des oberen Teils (10) des zum vorherigen Bauwerksabschnitt gehörenden Schalungsabschnittes angeordnet ist.

## Claims

1. A method of manufacturing a tower-like structure whose diameter in an upper region is smaller than in a lower region, in particular a structure in the form of a truncated cone, wherein the structure is erected in a plurality of building stages in which in each case a circumferentially-closed structure portion is built upon the partial structure built in the preceding building stages, **characterised in that** merely in some of the building stages in each case a structure portion (13, 13') to be constructed is cast by means of site-mixed concrete onto the partial structure built in the preceding building stages, and **in that** in each of a plurality of subsequent building stages, a precast concrete structure portion (52) premanufactured as a pre-fabricated part is placed by means of a lifting device upon the partial structure built in the preceding building stages.

2. A method according to claim 1, **characterised in that** an inner formwork consisting of a plurality of formwork portions (14, 14') is provided for the structure portions (13, 13') to be manufactured from site-mixed concrete, in each case a formwork portion having a circumferentially-closed main part (27, 27') and a circumferentially-closed upper part (10, 10') detachable from the main part, the exterior of which part (10, 10') forms part of the formwork shell.

3. A method according to claim 1 or claim 2, **characterised in that** the upper part (10) can be secured to the lower end of the main part (27') of the formwork portion (14') forming part of the next building stage.

4. A method according to any one of claims 1 to 3, **characterised in that** a plurality of structures which are substantially of the same type, in particular reinforced concrete towers of a wind power plant, are erected in concurrent construction activity.

5. A method according to any one of claims 1 to 4, **characterised in that** at least some of the precast concrete structure portions (52) in the form of pre-fabricated parts are manufactured parallel with the manufacture of the structure portions (13, 13') of site-mixed concrete.

6. A method according to any one of claims 1 to 5, **characterised in that** besides the foundations, at least two, preferably more than two, structure portions (13, 13') are manufactured by means of site-mixed concrete.

7. A method according to any one of claims 1 to 6, **characterised in that** in each case a formwork portion (14') is used as inner formwork to manufacture structure portions premanufactured in the form of a pre-fabricated part, which formwork portion (14') substantially corresponds to the formwork portions used for the manufacture of structure portions of site-mixed concrete, the formwork portion comprising a main part and an upper part detachable from the main part, and the upper part (10) of the formwork portion which forms part of the preceding structure portion being secured to the underside of the main part, and the inner formwork being placed on a floor slab and being secured thereto.

8. A method according to claim 7, **characterised in that** a platform is arranged between the inner formwork and the outer formwork, level with the upper part (10) of the formwork portion forming part of the preceding structure portion.

## Revendications

1. Procédé de fabrication d'un édifice de type tour, dont le diamètre dans une zone supérieure est inférieur à celui dans une zone inférieure, en particulier d'un édifice tronconique, dans lequel l'édifice est érigé au cours d'une pluralité d'étapes de construction, dans lesquelles un segment d'édifice fermé en circonférence est bâti respectivement sur l'édifice partiel construit au cours des étapes de construction précédentes, **caractérisé en ce que** seulement dans une partie des étapes de construction, respectivement un segment d'édifice (13, 13') à créer est bétonné au moyen de béton préparé sur place sur l'édifice partiel construit au cours des étapes de construction précédentes, et **en ce que** dans plusieurs étapes de construction consécutives, respectivement un segment d'édifice (52) prébétonné et préfabriqué sous forme d'élément préfabriqué est posé au moyen d'un engin de levage sur l'édifice partiel construit au cours des étapes de construction précédentes.

2. Procédé selon la revendication 1, **caractérisé en ce que** pour les segments d'édifice (13, 13') à fabriquer en béton préparé sur place, un coffrage intérieur composé de plusieurs segments de coffrage (14, 14') est prévu, dans lequel un segment de coffrage présente respectivement une partie principale (27, 27') fermée en circonférence et une partie supérieure (10, 10') fermée en circonférence, amovible de la partie principale, dont le côté extérieur forme une partie de la peau de coffrage.

3. Procédé selon la revendication 1 ou 2,
**caractérisé en ce que** la partie supérieure (10) peut être fixée à l'extrémité inférieure de la partie principale (27') du segment de coffrage (14') appartenant à l'étape de construction suivante.

4. Procédé selon l'une quelconque des revendications 1 à 3, **caractérisé en ce que** plusieurs édifices de construction substantiellement de même type, en particulier des tours en béton armé d'une centrale éolienne, sont érigés au cours d'une activité de construction simultanée.

5. Procédé selon l'une quelconque des revendications 1 à 4, **caractérisé en ce que** parallèlement à la fabrication des segments d'édifice (13, 13') en béton préparé sur place, au moins une partie des segments d'édifice (52) prébétonnés, réalisés sous forme d'éléments préfabriqués, est fabriquée.

6. Procédé selon l'une quelconque des revendications 1 à 5, **caractérisé en ce que** mis à part les fondations, au moins deux, de préférence plus de deux, segments d'édifice (13, 13') sont fabriqués au moyen de béton préparé sur place.

7. Procédé selon l'une quelconque des revendications 1 à 6, **caractérisé en ce que** pour la fabrication de segments d'édifice préfabriqués sous forme d'éléments préfabriqués en tant que coffrage intérieur, respectivement un segment de coffrage (14') est utilisé qui correspond substantiellement aux segments de coffrage utilisés pour la fabrication de segments d'édifice en béton préparé sur place, dans lequel le segment de coffrage comprend une partie principale et une partie supérieure, amovible de la partie principale, et dans lequel, sur le côté inférieur de la partie principale, la partie supérieure (10) du segment de coffrage appartenant au segment d'édifice précédent est fixée et le coffrage intérieur est posé sur une plaque de fond et fixé à celle-ci.

8. Procédé selon la revendication 7, **caractérisé en ce qu'**entre le coffrage intérieur et le coffrage extérieur, un palier de la hauteur de la partie supérieure (10) du segment de coffrage appartenant au segment d'édifice précédent est disposé.
